# EUROPÄISCHE PATENTANMELDUNG

(11) **EP 1 060 658 A1**
(43) Veröffentlichungstag der Anmeldung: **20.12.2000**
(21) Anmeldenummer: 99111648.4
(22) Anmeldetag: 16.06.1999
(51) Int. Cl.: A01K 1/01

(54) **Tiertoilette, insbesondere Katzentoilette**

(71) Anmelder: Warnke, Rolf, 28197 Bremen (DE); Warnke, Günter, 28816 Stuhr (DE)
(72) Erfinder: Warnke, Rolf, 28197 Bremen (DE); Warnke, Günter, 28816 Stuhr (DE)
(74) Vertreter: Heiland, Karsten, Dipl.-Ing.

(57) **Zusammenfassung**

Eine Katzentoilette besteht aus einem schalenförmigen Behälter (11) und einem deckelförmigen Oberteil (12), wobei letzteres eine Öffnung (24) aufweist, durch die eine Katze in das Innere der Toilette gelangen kann. Der Behälter (11) ist mit Katzenstreu angefüllt. Das Oberteil (12) weist einen umlaufenden, breiten Randstreifen (25) auf, so daß der wirksame Innenquerschnitt des Oberteils (12) gegenüber dem wirksamen Innenquerschnitt des Behälters (11) verringert ist. Dadurch wird verhindert, daß Katzenurin bis an die aufrechten Wandungen (14 bis 17) des Behälters (11) gelangt. Vorzugsweise ist im Inneren des Oberteils (12) noch ein umlaufender, abwärts gerichteter Abtropfrand (29) vorgesehen.

## Beschreibung

Die Erfindung betrifft eine Tiertoilette, insbesondere Katzentoilette, mit einem unteren Behälter zur Aufnahme einer Tierstreu- bzw. Katzenstreu, wobei der Behälter eine Bodenwand und aufrechte Wandungen aufweist, und mit einem Oberteil, das eine Öffnung aufweist, wobei ein Tier durch die Öffnung auf die Tierstreu gelangen kann.

Bekannt sind Katzentoiletten, bestehend aus einer unteren Schale und einem oberen Deckel, wobei der Deckel einen oberhalb der Katzenstreu gebildeten Innenraum begrenzt, welcher durch eine Öffnung im Deckel zugänglich ist. Der Bewegungsraum einer Katze ist durch Wandungen des Deckels definiert.

Katzenstreu soll den Katzenurin binden und durch Verklumpung eine leichte Entfernung desselben Ermöglichen. Ein kurzfristiger kompletter Austausch der Katzenstreu kann dann unterbleiben. Es muß lediglich entsprechend der Menge der entnommenen Klumpen von Zeit zu Zeit etwas Streu nachgefüllt werden.

Die verklumpte Streu hat eine feuchte Konsistenz und haftet leicht an den Wandungen der Katzentoilette. Ein Säubern der Wandungen ist äußerst lästig bzw. zeitraubend und soll deshalb möglichst vermieden werden.

Aufgabe der vorliegenden Erfindung ist es, eine Tiertoilette zu schaffen, bei der durch Flüssigkeit verklumpte Streu nicht in Kontakt mit den Wandungen kommt.

Die erfindungsgemäße Tiertoilette ist dadurch gekennzeichnet, daß das Oberteil (Deckel) einen gegenüber dem Behälter (Schale) verringerten Innenquerschnitt aufweist, derart, daß für das Tier eine kleinere Bewegungsfläche gebildet ist, als dies einem Innenquerschnitt des Behälters entspricht. Das Tier bzw. die Katze kann somit bei Aufenthalt in der Toilette nicht bis an die seitlichen Wandungen des Behälters gelangen. Die vorgesehene Querschnittsverringerung ist so bemessen, daß der Katzenurin nicht in Berührung mit seitlichen oder aufrechten Wandungen des Behälters kommt. Erst mit dieser Ausgestaltung sind ein sparsamer Umgang mit Streu und eine einfache Handhabung der Toilette möglich. Insgesamt wird der Aufwand zur Reinhaltung der Toilette deutlich verringert.

Vorzugsweise ist im Oberteil innenseitig eines umlaufenden Randstreifens ein gegenüber diesem abwärts gerichteter Abtropfrand vorgesehen. Dadurch wird verhindert, daß Katzenurin von Wandungen des Oberteils auf seitliche bzw. aufrechte Wandungen des Behälters gelangt. Vielmehr tropft gegebenenfalls vorhandene Flüssigkeit über den Abtropfrand auf die Streu und verklumpt dort. Der Abtropfrand kann auch unabhängig von der oben genannten Querschnittsverringerung vorgesehen sein.

Weitere Merkmale der Erfindung ergeben sich aus den Ansprüchen. Bevorzugte Ausführungsformen der Erfindung werden nachfolgend anhand von Zeichnungen erläutert. Es zeigen:
- Fig. 1: eine erfindungsgemäße Katzentoilette in perspektivischer Darstellung schräg von vorn,
- Fig. 2: die Katzentoilette im Querschnitt,
- Fig. 3: ein Detail des Querschnitts gemäß Fig. 2, nämlich der Übergang zwischen unterem Behälter und Oberteil,
- Fig. 3a, 3b, 3c: das Detail analog Fig. 3, jedoch mit geändertem Übergang zwischen unterem Behälter und Oberteil,
- Fig. 4: den unteren Behälter in Frontansicht,
- Fig. 5: das Oberteil in Frontansicht,
- Fig. 6: den Behälter in der Draufsicht,
- Fig. 7: das Oberteil 1 in der Draufsicht.
- Fig. 8: eine andere Ausführungsform des Oberteils in Frontansicht,
- Fig. 8a: die Ausführungsform gemäß Fig. 8 in der Rückansicht,
- Fig. 8b: die Ausführungsfomr gemäß Fig. 8 in Seitenansicht,
- Fig. 9: eine weitere Ausführungsform in Frontansicht,
- Fig. 9a: die Ausführungsform gemäß Fig. 9 in Rückansicht,
- Fig. 9b: die Ausführungsform gemäß Fig. 9 in Seitenansicht

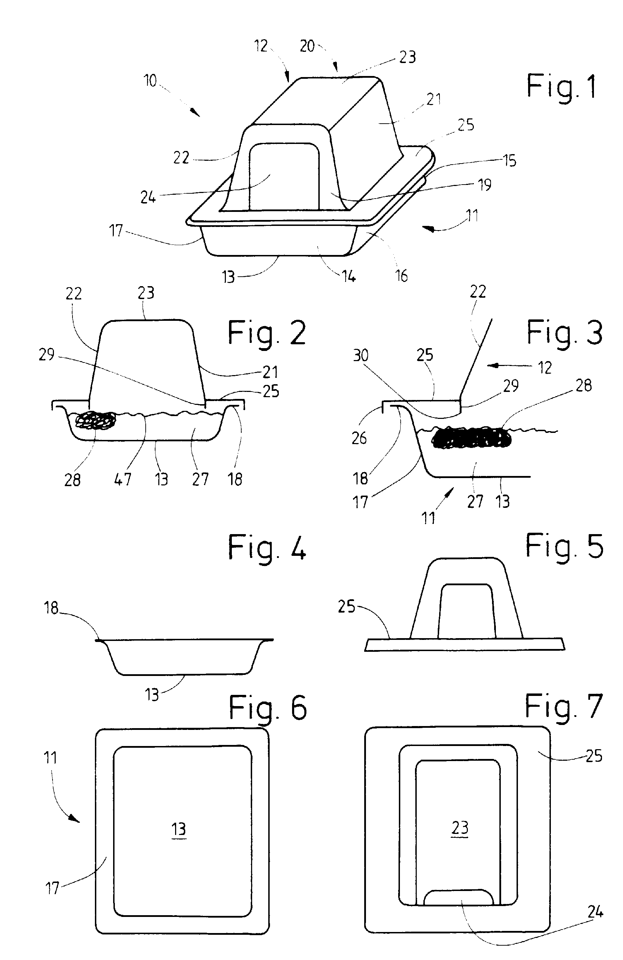

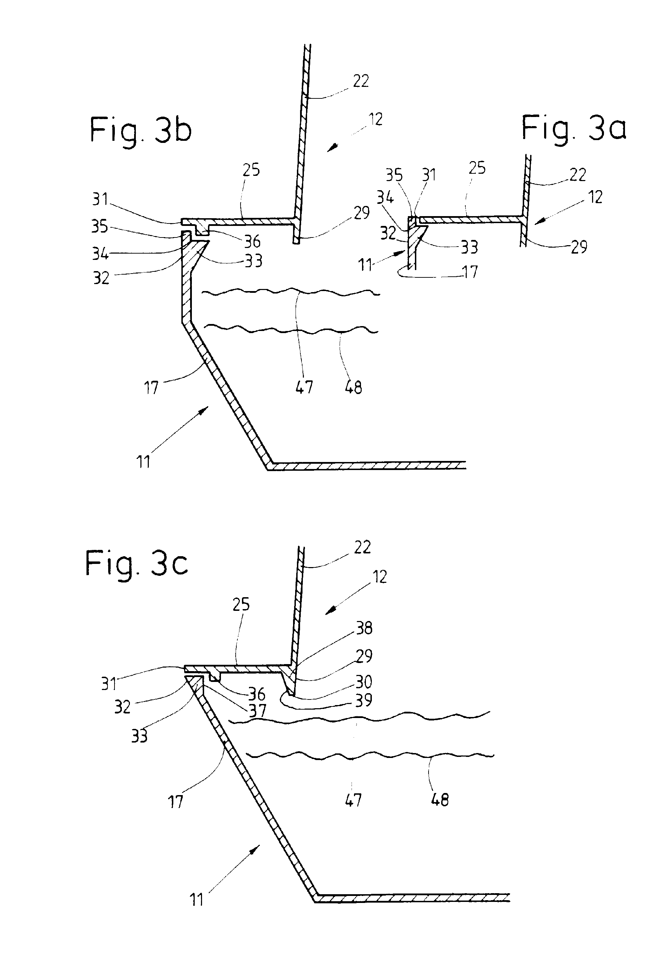

Die gezeigte Katzentoilette 10 besteht aus zwei Teilen, nämlich einem Behälter 11 nach Art einer Schale und einem Oberteil 12 nach Art eines Deckels. Der Behälter 11 weist eine Bodenwand 13 und aufrechte bzw. schräg aufwärts gerichtete Wandungen auf, nämlich Vorderwand 14, Rückwand 15 und Seitenwände 16, 17. Die genannten aufrechten Wandungen weisen einen gemeinsamen, oben umlaufenden und nach außen gerichteten Randstreifen 18 auf, am besten erkennbar in den Fig. 2 und 3.

Das Oberteil 12 deckt den Behälter 11 ab und bildet über diesem einen Innenraum, in dem sich eine Katze aufhalten kann. Gebildet wird das Oberteil 12 ebenfalls aus aufrechten Wandungen, nämlich Vorderwand 19, Rückwand 20, Seitenwänden 21, 22 und (quer dazu) Oberwand 23. In der Vorderwand 19 ist eine Öffnung 24 als Ein- und Ausgang vorgesehen. Untere Ränder der genannten aufrechten Wandungen weisen einen gemeinsamen umlaufenden und nach außen gerichteten Randstreifen 25 auf. Dieser erstreckt sich im wesentlichen, ebenso wie der Randstreifen 18 des Behälters 11 in einer waagerechten Ebene.

Die Randstreifen 18, 25 sind in bevorzugter Weise dimensioniert und gestaltet. Der Randstreifen 25 ist besonders breit ausgebildet. Dadurch ergibt sich ein Versatz der Wandungen 19 bis 22 des Oberteils 12 gegenüber den Wandungen 14 bis 17 des Behälters 11. Der genannte Versatz beträgt etwa 2cm bis 12cm, vorzugsweise 6cm bis 8cm. Durch den Versatz ergibt sich eine Verringerung des Innenquerschnitts des Oberteils gegenüber dem Innenquerschnitt des Behälters 11. Zur besseren Fixierung des Oberteils 12 auf dem Behälter 11 weist das Oberteil einen außen an den Randstreifen 25 angrenzenden und abwärts gerichteten Vertikalrand 26 auf, der über den Randstreifen 18 des Behälters 11 faßt und möglichst dicht an diesen anliegt.

Der Behälter 11 ist etwa 6cm bis 8cm hoch mit Katzenstreu 27 angefüllt. Dieses bildet in Verbindung mit Katzenurin einen Klumpen 28, der - je nach klumpenbildender Eigenschaft der Streu - mehr oder weniger vollständig mit einer Forkenschaufel entnehmbar ist. Die beschriebene Querschnittsverengung des Oberteils 12 bewirkt, daß eine Katze sich nicht bis an die Wandungen 14 bis 17 setzen kann. Entsprechend kann auch der durch das Katzenurin gebildete Klumpen 28 nicht an den Wandungen 14 bis 17 kleben und so die Reinigung der Katzentoilette erschweren. Der bevorzugte Randabstand von 6cm bis 8cm gewährleistet, daß auch bei einem löschblattartigen Ausbreiten des Katzenurins in der Streu die Wandungen 14 bis 17 nicht erreicht werden.

Fig. 3 zeigt eine weitere Besonderheit. In Fortsetzung der Wandungen 19 bis 22 des Oberteils 12 erstreckt sich ein abwärts gerichteter, umlaufender Abtropfrand 29. Dieser weist eine Breite in vertikaler Richtung von etwa 0,5cm bis 3cm auf und erstreckt sich senkrecht zum Randstreifen 25. Sofern an die Wandungen 19 bis 22 Katzenurin gelangt, kann dieses nicht unter den Randstreifen 25 und damit bis auf die Wandungen 14 bis 17 des Behälters 11 laufen. Vielmehr tropft der Katzenurin von einer unteren Abtropfkante 30 des Abtropfrandes 29 auf die Streu 27 und bildet dort den Klumpen 28. Der Abtropfrand 29 ermöglicht somit eine bessere Reinhaltung des Behälters 11.

Figuren 3a bis 3c betreffen Abwandlungen in der Konstruktion des Übergangs zwischen Oberteil 12 und Behälter 11. Ebenso wie in Figur 3 sind Seitenwand 22 und Randstreifen 25 als L-förmige Konstruktion vorgesehen mit einem nahezu vertikalen Schenkel und einem horizontalen Schenkel, wobei sich der vertikale Schenkel (Seitenwand 22) nach unten etwas über den horizontalen Schenkel (Randstreifen 25) als Abtropfrand 29 fortsetzt. Im Gegensatz zu Figur 3 weist der Behälter 11 keinen auswärtsgerichteten Randstreifen 18 auf. Vielmehr erstreckt sich die seitliche Wandung (14 bis 17) aufwärts bis zu einer Außenkante 31 des Randstreifens 25.

In Figur 3a ist ein oberer Rand 32 der Wandung 17 (bzw. der Wandungen 14, 15, 16) mit einer Verdickung 33 versehen, die ein nach oben und einwärts gerichtetes L-Profil 34 aufweist. In dem L-Profil 34 kommt die Außenkante 31 des Randstreifens 25 zu liegen. Die Außenkante 31 wird somit nach außen begrenzt durch einen aufwärts gerichteten Profilsteg 35 und liegt auf der Verdickung 33 auf.

In der selben Weise wie in Figur 3a ist der obere Rand 32 in der Ausführungsform gemäß Figur 3b gestaltet. Unterschiede bestehen hinsichtlich des Randstreifens 25 nahe der Außenkante 31. Letztere liegt auf dem Profilsteg 35 auf und schließt somit seitlich nach außen mit diesem bündig ab. Nahe der Außenkante 31 aber mit einem Abstand zu dieser entsprechend der Härte des Profilsteges 35 weist der Randstreifen 25 einen abwärts gerichteten Steg 36 auf, der sich parallel zum Profilsteg 35 erstreckt und auf der Verdickung 33 aufliegt. Es sind somit zwei Auflageflächen gebildet, eine zwischen Steg 36 und Verdickung 33 und eine zweite zwischen Profilsteg 35 und Randstreifen 25 nahe der Außenkante 31. In beiden Ausführungsformen der Figuren 3a und 3b ist die Verdickung 33 nach innen gerichtet. Eine nach außen gerichtete Verdickung ist ebenfalls möglich.

Der Randstreifen 25 ist in Figur 3c ähnlich der Ausführung in Figur 3b ausgebildet, nähmlich mit dem abwärts gerichteten Steg 36. Abgewandelt ist aber der obere Rand 32 des Behälters 11. Dieser weist nämlich lediglich eine Verdickung 33 ohne L-Profil auf. Der Seitenrand 25 liegt nahe der Außenkante 31 auf der Verdickung 33 auf, mit dem Steg 36 benachbart zur Verdickung 33.

Die Seitenwand 17 ist bis zum oberen Rand 32 schräg nach außen gerichtet. Die Verdickung 33 erstreckt sich demgegenüber nach innen, so daß sich im Bereich der Verdickung 33 eine innere vertikal gerichtete Fläche 37 ergibt, die außen am Steg 36 anliegt. In allen drei Ausführungsformen 3a bis 3c (ebenso in Figur 3) ist durch die beschriebenen Konstruktionen das Oberteil 12 auf dem Behälter 11 gegen Querbewegung gesichert.

Eine zusätzliche Besonderheit zeigt noch Figur 3c. Dort ist der Abtropfrand 29 als Verlängerung der Seitenwand 22 nach unten verstärkt ausgebildet und zwar mit einer Verdickung 38 im Winkel zwischen dem Abtropfrand 29 und dem Randstreifen 25 und unter Bildung einer auswärts gerichteten Schrägfläche 39, die sich von der Abtropfkante 30 schräg aufwärts zum Randstreifen 25 erstreckt.

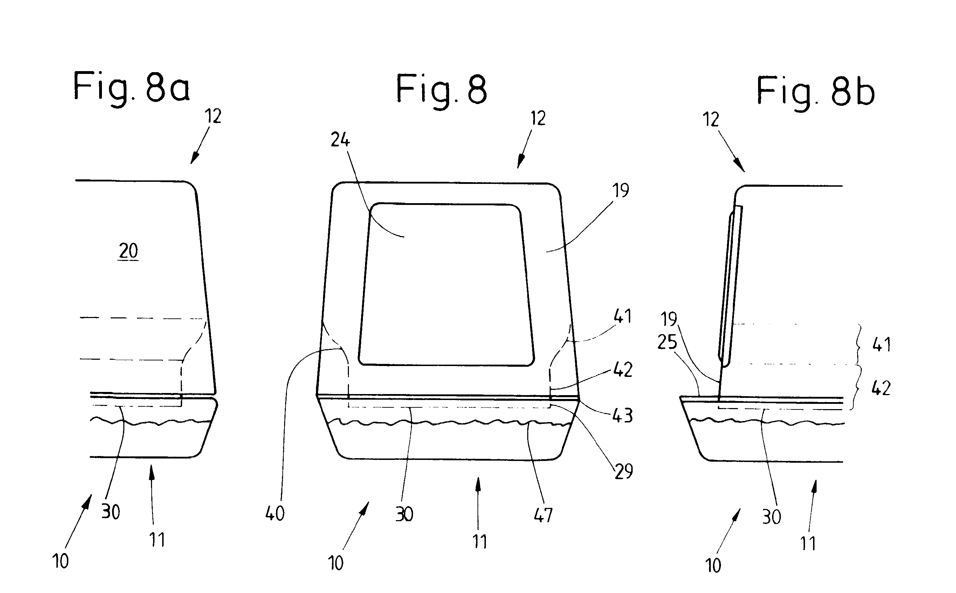

Figur 8 zeigt eine andere Ausführungsform eines Oberteils 12. Behälter 11 und Oberteil 12 schließen seitlich etwa bündig ab. Einwärts oder auswärts gerichtete Flansche mit Stegen zur Sicherung gegen seitliches Verschieben können vorgesehen sein. Der engere Bewegungsspielraum für die Katze im Inneren der Katzentoilette 10 wird erzielt durch zusätzliche Innenwandungen 40 im Oberteil 12. Diese sind etwa im unteren Drittel der Gesamthöhe des Oberteils 12 vorhanden und ertrecken sich (von oben nach unten) zunächst schräg einwärts mit einem Abschnitt 41 und daran anschließend vertikal abwärts mit einem Abschnitt 42. Letzterer ertreckt sich bis knapp unterhalb eines oberen umlaufenden Randes 43 des Behälters 11.

Da die Wandung 40 innenliegend und zusätzlich zur äußeren Wandung vorgesehen ist, ist erstere von außen nicht sichtbar. Lediglich im Bereich der Öffnung 24 ist die Vorderwand 19 insgesamt nach innen versetzt, so daß in diesem Bereich keine zusätzliche Innenwand vorgesehen ist, siehe Figur 8b. Dort ist eine konstruktive Gestaltung des Übergangs zwischen Vorderwand 19 und Randstreifen 25 analog den Figuren 3, 3a bis 3c erkennbar. Ebenso wie in den Figuren 1 bis 3 ist in der Ausführungsform der Figuren 8, 8a und 8b ein Abtropfrand 29 mit einer Abtropfkante 30 vorgesehen. Der Abschnitt 42 bzw. die Vorderwand 19 gehen in den Abtropfrand 29 über.

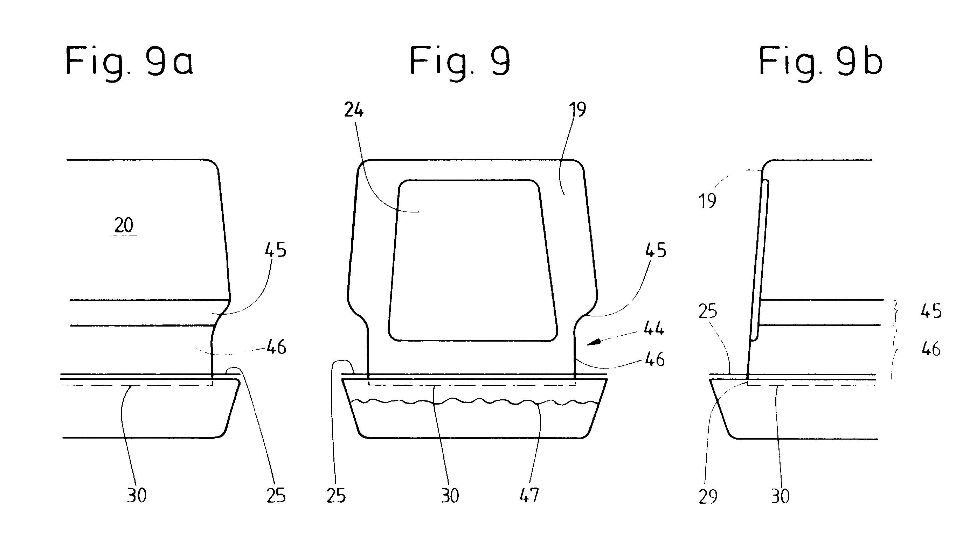

Eine Ausführungsform ähnlich der zuvorbeschriebenen zeigen die Figuren 9, 9a und 9b. Anstelle einer zusätzlichen Innenwand weist das Oberteil 12 im unteren Bereich einwärts gerichtete Außenwände 44 auf. Die Seitenwände 21, 22 sowie die Rückwand 20 sind im unteren Drittel schräg einwärts gerichtet (Abschnitt 45) und unten daran anschließend vertikal abwärtsgerichtet (Abschnitt 46). Nahe dem Behälter 11 ist - analog Figuren 1 bis 3 - ein umlaufender Rand 25 vorhanden, ebenso Abtropfrand 29 und Abtropfkante 30. Der besondere Vorteil der in den Figuren 8 bis 9b gezeigten Ausführungsformen besteht in dem größeren Bewegungsraum für die Katze innerhalb der Toilette 10, da letztere lediglich im Bereich des Übergangs zwischen Behälter 11 und Oberteil 12 mit verringertem Querschnitt ausgebildet ist. Im Übrigen weist das Oberteil 12 annähernd dieselbe auch innen wirksame Breite wie der Behälter 11 auf.

Die Höhe des Behälters 11 ist in Abstimmung mit der Anordnung des Abtropfrandes 29 so gewählt, daß der Füllstand der Katzenstreu etwa ein bis zwei Zentimeter unterhalb der Abtropfkante 30 liegt. Der Füllstand der Streu ist in den Figuren 2, 3, 8 und 9 als Wellenlinie 47 angegeben, ebenso in den Figuren 3b und 3c eine Variation des Füllstandes zwischen den Linien 47 und 48.

In einer nicht gezeigten Ausführungsform ist ein Behälter mit einem oben umlaufenden, einwärts gerichteten Randstreifen vorgesehen, durch den ein verringerter Öffnungsquerschnitt des Behälters gegenüber einem maximalen Innenquerschnitt desselben entsteht. Der Randstreifen kann Teil des Behälters oder als abnehmbarer Kranz ausgebildet sein.

### Bezugszeichenliste :

- 10: Katzentoilette
- 11: Behälter
- 12: Oberteil
- 13: Bodenwand
- 14: Vorderwand
- 15: Rückwand
- 16: Seitenwand
- 17: Seitenwand
- 18: Randstreifen
- 19: Vorderwand
- 20: Rückwand
- 21: Seitenwand
- 22: Seitenwand
- 23: Oberwand
- 24: Öffnung
- 25: Randstreifen
- 26: Vertikalrand
- 27: Katzenstreu
- 28: Klumpen
- 29: Abtropfrand
- 30: Abtropfkante
- 31: Außenkante
- 32: oberer Rand
- 33: Verdickung
- 34: L-Profil 1
- 35: Profilsteg
- 36: Steg
- 37: vertikale Fläche
- 38: Verdickung
- 39: Schrägfläche
- 40: Innenwand
- 41: Abschnitt
- 42: Abschnitt
- 43: oberer Rand
- 44: Außenwand
- 45: Abschnitt
- 46: Abschnitt
- 47: Füllstandslinie
- 48: Füllstandslinie

## Patentansprüche

1. Toilette, insbesondere Katzentoilette, mit einem schalenförmigen Behälter (11) zur Aufnahme einer Tierstreu, bzw. Katzenstreu (27), wobei der Behälter (11) eine Bodenwand (13) und aufrechte Wandungen (14 bis 17) aufweist, und mit einem Oberteil (12), das eine Öffnung (24) aufweist, wobei ein Tier durch die Öffnung (24) auf die Tierstreu gelangen kann, **dadurch gekennzeichnet**, daß das Oberteil (12) einen gegenüber dem Behälter (11) - zumindest nahe diesem - verringerten Innenquerschnitt aufweist, derart, daß für das Tier eine kleinere Bewegungsfläche gebildet ist, als dies einem Innenquerschnitt des Behälters (11) entspricht.

2. Tiertoilette nach Anspruch 1, dadurch gekennzeichnet, daß das Oberteil (12) einen umlaufenden Randstreifen (25) aufweist, um dessen Breite oder weniger der Querschnitt des Oberteils (12) gegenüber dem Querschnitt des Behälter (11) verringert ist.

3. Tiertoilette nach Anspruch 2, dadurch gekennzeichnet, daß das Oberteil (12) nach Art eines Deckels ausgebildet ist und mit dem umlaufenden Randstreifen auf dem Behälter (11) bzw. einem Behälterrand aufliegt.

4. Tiertoilette nach Anspruch 3, dadurch gekennzeichnet, daß auch der Behälter (11) einen umlaufenden Randstreifen (18) aufweist, auf dem das Oberteil (12) aufliegt und durch den der Innenquerschnitt gegenüber einem Außenquerschnitt des Behälters (11) verringert ist, und daß der Randstreifen (25) des Oberteils (12) breiter ist als der Randstreifen (18) des Behälters (11).

5. Tiertoilette nach einem oder mehreren der Ansprüche 1 bis 4, dadurch gekennzeichnet, daß das Oberteil (12) innenseitig des umlaufenden Randstreifens (25) einen gegenüber diesem abwärts gerichteten Abtropfrand (29) aufweist.

6. Tiertoilette nach Anspruch 5, dadurch gekennzeichnet, daß der umlaufende Randstreifen (25) des Oberteils (12) etwa in einer horizontalen Ebene liegt, während der Abtropfrand (29) vertikal gerichtet ist und mit einer Abtropfkante (30) unterhalb der Ebene des Randstreifens (25) liegt.

7. Tiertoilette nach Anspruch 5 oder 6, dadurch gekennzeichnet, daß der Abtropfrand (29) in Fortsetzung aufrechter Wandungen (19 bis 22) des Oberteils (12) gebildet ist.

8. Tiertoilette nach einem oder mehreren der Ansprüche 1 bis 7, dadurch gekennzeichnet, daß die Querschnittsverringerung bzw. die Breite des umlaufenden Randstreifens (25) des Oberteils (12) etwa 2cm bis 12cm beträgt, vorzugsweise 6cm bis 8cm.

9. Tiertoilette nach einem oder mehreren der Ansprüche 1 bis 8, dadurch gekennzeichnet, daß der Abtropfrand (29) etwa 0,5cm bis 3cm breit ist.

10. Tiertoilette nach einem oder mehreren der Ansprüche 1 bis 9, dadurch gekennzeichnet, daß Behälter (11) und Oberteil (12) etwa gleiche Außendurchmesser aufweisen und daß im Bereich des Übergangs zwischen diesen, oberhalb des vorgesehenen Füllstands der Streu im Behälter (11), eine Querschnittsverengung vorgesehen ist, insbesondere mit einem umlaufenden Randstreifen (25) des Oberteils (12).

11. Tiertoilette, insbesondere Katzentoilette, mit einem schalenförmigen Behälter zur Aufnahme einer Tierstreu bzw. Katzenstreu, wobei der Behälter eine Bodenwand und aufrechte Wandungen aufweist, dadurch gekennzeichnet, daß ein oben umlaufender, einwärts gerichteter, fest verbundener oder abnehmbarer Randstreifen vorgesehen ist, durch den ein verringerter Öffnungsquerschnitt des Behälters gegenüber einem maximalen Innenquerschnitt desselben entsteht.
